# EUROPÄISCHE PATENTANMELDUNG

(11) **EP 2 136 121 A1**
(43) Veröffentlichungstag der Anmeldung: **23.12.2009**
(21) Anmeldenummer: 08157862.7
(22) Anmeldetag: 09.06.2008
(51) Int. Cl.: F16L 33/207

(54) **Pressfitting für ein Rohr, insbesondere Kunststoffrohr oder Kunststoff/Metallverbund-Rohr**

(71) Anmelder: Uponor Innovation AB, 513 81 Fristad (SE)
(72) Erfinder: Galle, Roland, 97422 Schweinfurt (DE); Geier, Rudolf, 97633 Sulzfeld (DE)
(74) Vertreter: Epping - Hermann - Fischer

(57) **Zusammenfassung**

Der Pressfitting für ein Rohr, insbesondere Kunststoffrohr oder Kunststoff/Metallverbund-Rohr, ist mit einem Fittingkörper (12) versehen, der eine Stützhülse (14) mit einem freien Ende (16) aufweist, welche an ihrer Außenseite (18) profiliert ist. Ferner weist der Pressfitting eine Presshülse (26) auf, die mit Abstand zur Stützhülse (14) angeordnet ist und diese umgibt. Die Stützhülse (14) ist durch Stauchung in mindestens einer zur axialen Erstreckung der Stützhülse (14) radialen Ebene zur Bildung einer Pressrille (32) verformbar ist. Die Stützhülse (14) weist an ihrer Außenseite (18) mindestens eine Aufnahmenut (20) für ein Dichtmaterial auf. Die Aufnahmenut (20) ist axial versetzt zur Pressrille (32) der Presshülse (26) angeordnet. Die Stützhülse (14) weist an ihrer Außenseite (18) eine neben der Dichtmaterial-Aufnahmenut (20) angeordnete und mit der Pressrille (32) der Presshülse (26) im wesentlichen fluchtende Entlastungsnut (24) auf.

## Beschreibung

Die Erfindung betrifft einen Pressfitting für ein Rohr, insbesondere Kunststoffrohr oder Kunststoff/Metallverbund-Rohr.

Pressfittinge sind in unterschiedlichen Ausgestaltungen bekannt. Sie weisen im allgemeinen einen Fittingkörper auf, der mit einer Stützhülse versehen ist, die ein freies Ende aufweist, über das das anzuschließende Rohr aufgeschoben wird. Die Außenseite der Stützhülse ist dabei im allgemeinen profiliert und weist Zugentlastungsstrukturen sowie Nuten zur Aufnahme von Dichtmaterialien wie beispielsweise O-Ringe auf.

Das anzuschließende Rohr wird unter plastischer Verformung gegen die Stützhülse gepresst. Hierbei kann man sich metallischer Presshülsen bedienen, die die Stützhülse mit Abstand umgeben. Es ist aber auch möglich, dass diese Presshülsen als Teil der Metalllage eines Kunststoff/Metallverbund-Rohres ausgebildet sind, die Metalllage derartiger Rohre also die bleibende Verformung des im allgemeinen aus Kunststoff bestehenden Innenrohres aufrechterhalten,

Die aufzubringenden Verformungskräfte bei Pressfittingen für große Rahrguerschnitte (beispielsweise Nennweiten von größer 50 mm) sind nicht unbeträchtlich, da die Wandung derartiger Rohre relativ dick ausgeführt sein muss.

Aufgabe der Erfindung ist es, einen Pressfitting für Rohre insbesondere größerer Dimensionen zu schaffen, bei dem die aufzuwendenden Verpresskräfte dennoch nach oben hin begrenzt sein können.

Zur Lösung dieser Aufgabe wird mit der Erfindung ein Pressfitting für ein Rohr, insbesondere Kunststoffrohr oder Kunststoff/Metallverbund-Rohr vorgeschlagen, der versehen ist mit
- einem Fittingkörper, der eine Stützhülse mit einem freien Ende aufweist, welche an ihrer Außenseite profiliert ist, und
- einer Presshülse, die mit Abstand zur Stützhülse angeordnet ist und diese umgibt,
- wobei die Stützhülse durch Stauchung in mindestens einer zur axialen Erstreckung der Stützhülse radialen Ebene zur Bildung einer Pressrille verformbar ist,
- wobei die Stützhülse an ihrer Außenseite mindestens eine Aufnahmenut für ein Dichtmaterial aufweist und die Aufnahmenut axial versetzt zur Pressrille der Presshülse angeordnet ist und
- wobei die Stützhülse an ihrer Außenseite eine neben der Dichtmaterial-Aufnahmenut angeordnete und mit der Pressrille der Presshülse im wesentlichen fluchtende Entlastungsnut aufweist.

Der erfindungsgemäße Pressfitting ist mit einer Stützhülse versehen, die auf ihrer Außenseite nebeneinanderliegende Aufnahme- und Entlastungsnuten aufweist. So weist die Stützhülse mindestens eine Aufnahmenut für ein Dichtmaterial wie beispielsweise einen Elastomer-O-Ring und eine neben der Aufnahmenut angeordnete Entlastungsnut auf. Beide Nuten sind durch einen radial abstehenden umlaufenden Steg voneinander getrennt. Die Entlastungsnut befindet sich im wesentlichen in Flucht mit einer Pressrille, wie sie beim Verpressen der Presshülse in diese eingeprägt wird, Die Pressrille erstreckt sich in einer zur Achse der Stützhülse radialen Ebene. Axial versetzt zur Pressrille befindet sich die Dichtmaterial-Aufnahmenut. Somit wird die Pressrille in Riahtung auf die Entlastungsnut verformt, so dass das Material der Rohrwandung in die Entlastungsnut entweichen kann. Im Bereich seitlich der Entlastungsnut, innerhalb dessen Material der Rohrwandung ebenfalls gegen die Stützhülse gedrückt bzw. gepresst wird, befindet sich dann unmittelbar das Dichtmaterial, was in dichtende Anlage mit der Innenseite des Rohres gelangt.

Die erfindungsgemäße vorgesehene Entlastungsnut dient der Aufnahme eines Großteils des verdrängten Pressvolumens (Wandungsmaterial). Damit kann nun für die Verpressung eines Rohres größerer Dimension ein Presswerkzeug verwendet werden, das ausgelegt ist für die Verpressung von im Durchmesser kleineren Rohren. Die Presskraft dieser Presswerkzeuge ist aber dann immer noch ausreichend, um ein Rohr größerer Dimension auf die Stützhülse des Fittingkörpers des erfindungsgemäßen Pressfittings zu pressen.

In vorteilhafter Weiterbildung der Erfindung ist vorgesehen, dass die Presshülse als sowohl zum Fittingkörper als auch zum Rohr getrenntes Element (insbesondere aus einer Metalllegierung oder allgemein Metall) ausgebildet ist. Als "Presshülse" im Sinne des erfindungsgemäßen Pressfittings wird aber auch derjenige axiale Abschnitt der Metalllage eines Kunststoff/Metallverbund-Rohres betrachtet, der bei mit dem Pressfitting verbundenem Rohr die Stützhülse umgibt.

In vorteilhafter Weiterbildung der Erfindung ist vorgesehen, dass die Dichtmaterial-Aufnahmenut von zwei Flanken begrenzt ist, wobei die der Entlastungsnut zugewandte erste Flanke eine geringere Höhe als die der Entlastungsnut abgewandte zweite Flanke aufweist.

Wie bereits oben erwähnt, ist die Dichtmaterial-Aufnahmenut gegenüber der Entlastungsnut durch einen umlaufenden radialen Steg getrennt. Dieser radiale Steg ist nun in seiner Höhe niedriger als die zweite die Dichtmaterial-Aufnahmenut begrenzende Flanke. Hierdurch wird erreicht, dass sich das verformte Material der Rohrwandung im Bereich der Pressrille noch besser an das Dichtmaterial in der Aufnahmenut anschmiegt.

Ferner ist es von Vorteil, wenn die Stützhülse an ihrem freien Ende eine ballig geformte Außenfläche aufweist bzw. eine nur unter einem verhältnismäßig kleinen Winkel angeschrägte Außenfläche aufweist. Insgesamt ist also die Außenkontur der Stützhülse an ihrem freien Ende vergleichsweise flach ausgelegt. All dies trägt dazu bei, dass das zu montierende Rohr sich leichter auf die Stützhülse aufschieben lässt. Hierbei ist zu beachten, dass ein Rohr größerer Dimension eine recht steife Wandung aufweist, so dass es gilt, Reibung zwischen dem Rohr und der Stützhülse weitestgehend zu vermeiden.

Diesem Zweck dient bei einer weiteren Ausgestaltung der Erfindung auch das Merkmal, dass die Stützhülse an ihrem freien Ende den größten Außendurchmesser aufweist. Insbesondere gilt dies für eventuell vorhandene Verzahnungsregionen an der Außenseite der Stützhülse, wie sie für die Zugentlastung an sich üblich sind. Die Profilierung der Stützhülse nimmt also ausgehend von dem freien Ende der Stützhülse in der Höhe, d.h. in der radialen Erstreckung ab.

Die Erfindung wird nachfolgend anhand eines Ausführungsbeispiels und unter Bezugnahme auf die Zeichnung näher erläutert. Im einzelnen zeigen dabei:
- Fig. 1: einen Halbschnitt durch den Fittingkörper mit Stützhülse eines Press- fittings gemäß einem Ausführungsbeispiel der Erfindung und
- Fig. 2: einen Längsschnitt durch den Fitting gemäß Fig. 1 mit angeschlosse- nem Rohr im verpressten Zustand.

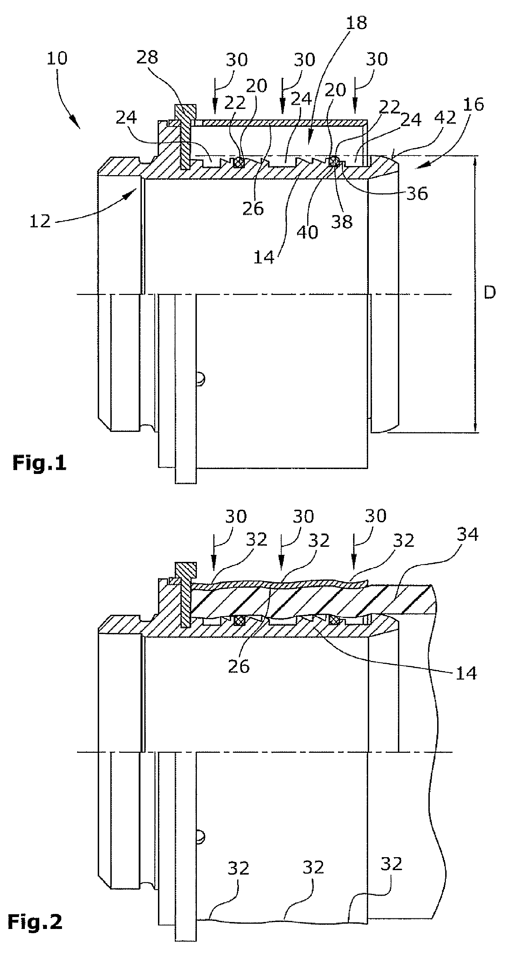

Fig. 1 zeigt im Halbschnitt einen Pressfitting 10, der einen Fittingkörper 12 aufweist, von dem eine Stützhülse 14 absteht. Die Stützhülse 14 weist ein freies Ende 16 auf, über das das anzuschließende Rohrende geschoben wird. Die Stützhülse 14 ist an ihrer Außenseite 18 profiliert und weist in diesem Ausführungsbeispiel zwei Dichtmaterial-Aufnahmenuten 20 für jeweils einen O-Ring 22 auf. Benachbart zu diesen beiden Aufnahmenuten 20 sind an der Außenseite 18 der Stützhülse 14 jeweils Entlastungsnuten 24 ausgebildet. Eine dritte Entlastungsnut 24 befindet sich zwischen den beiden Aufnahmenuten 20.

Die Stützhülse 14 ist von einer plastisch verformbaren und insbesondere aus metallischem Material bestehenden Presshülse 26 mit Abstand umgeben. In diesem Ausführungsbeispiel ist die Presshülse 26 mittels mehrerer Halteelemente 28 am Fittingkörper 12 gehalten und damit vormontiert. Die Presshülse 26 wird innerhalb der drei mit den Pfeilen 30 gekennzeichneten Radialebenen durch Stauchung von außen verformt. Mit der Verformung der Presshülse 26, bei der dann drei Pressrillen 32 bzw. Presstäler entstehen, geht auch eine Verformung des Materials der Wandung des Rohres einher.

Dies ist in Fig. 2 gezeigt. Zu erkennen ist, dass bei auf die Stützhülse 14 aufgeschobenem und verpresstem Rohrende 34 dessen Wandung wellenförmig o.dgl. verformt ist, was durch die Pressrillen 32 verursacht ist. Die Pressrillen 32 liegen in radialer Flucht mit den Entlastungsnuten 24, so dass das Material der Wandung des Rohrendes 34 dort eintauchen kann. Hierdurch wird das Material der Rohrwandung zwischen zwei aufeinanderfolgende Entlastungsnuten 24 ebenfalls gegen die Außenseite 18 der Stützhülse 14 gedrückt. In diesen Bereichen befindet sich der O-Ring 22 einer Aufnahmenut 20. Insbesondere sei hervorgehoben, dass bezogen auf die Figuren die Entlastungsnut 24 und die Dichtmaterial-Aufnahmenut 20, die beide am nächsten zum freien Ende 16 der Stützhülse 14 angeordnet sind, unmittelbar nebeneinander liegen. Ferner ist zu erkennen, dass der radiale, umlaufende Trennsteg 36 zwischen diesen beiden Nuten eine (erste) Flanke 38 der Dichtmaterial-Aufnahmenut 20 definiert, die niedriger ist als die die Dichtmaterial-Aufnahmenut 20 definierende zweite Flanke 40. Das wirkt sich positiv auf die Kontaktierung des Rohrendes 34 mit dem O-Ring 22 aus, wie in Fig. 2 zu erkennen ist.

Wie ferner anhand der Figuren zu erkennen ist, ist die Außenseite 18 der Stützhülse 14 an deren freien Ende 16 ballig ausgeführt (siehe bei 42). Die Anschrägung der Stützhülse 14 an der Außenseite 18 ist in dem Bereich des freien Endes 16 relativ flach gehalten. Überdies sei erwähnt, dass die Stützhüise 14 an ihrem freien Ende 16 ihren größten Außendurchmesser D aufweist.

## Patentansprüche

1. Pressfitting für ein Rohr, insbesondere Kunststoffrohr oder Kunststoff/Metallverbund-Rohr, mit
- einem Fittingkörper (12), der eine stützhülse (14) mit einem freien Ende (16) aufweist, welche an ihrer Außenseite (18) profiliert ist, und
- einer Presshülse (26), die mit Abstand zur Stützhülse (14) angeordnet ist und diese umgibt,
- wobei die Stützhülse (14) durch Stauchung in mindestens einer zur axialen Erstreckung der Stützhülse (14) radialen Ebene zur Bildung einer Pressrille (32) verformbar ist,
- wobei die Stützhülse (14) an ihrer Außenseite (18) mindestens eine Aufnahmenut (20) für ein Dichtmaterial aufweist und die Aufnahmenut (20) axial versetzt zur Pressrille (32) der Presshülse (26) angeordnet ist und
- wobei die Stützhülse (14) an ihrer Außenseite (18) eine neben der Dichtmaterial-Aufnahmenut (20) angeordnete und mit der Pressrille (32) der Presshülse (26) im wesentlichen fluchtende Entlastungsnut (24) aufweist.

2. Pressfitting nach Anspruch 1, **dadurch gekennzeichnet, dass** die Dichtmaterial-Aufnahmenut (20) von zwei Flanken begrenzt ist, wobei die der Entlastungsnut (24) zugewandte erste Flanke eine geringere Höhe als die der Entlastungsnut (24) abgewandte zweite Flanke aufweist.

3. Pressfittings nach Anspruch 1 oder 2, **dadurch gekennzeichnet, dass** die Stützhülse (14) an ihrem freien Ende (16) den größten Außendurchmesser aufweist.

4. Pressfittings nach einem der Ansprüche 1 bis 3, **dadurch gekennzeichnet, dass** die Stützhülse (14) an ihrem freien Ende (16) eine ballig geformte Außenfläche aufweist.

5. Pressfitting nach einem der Ansprüche 1 bis 4, **dadurch gekennzeichnet, dass** die Presshülse (26) als zum Rohr getrenntes Element ausgebildet ist.

6. Pressfitting nach einem der Ansprüche 1 bis 4, **dadurch gekennzeichnet, dass** die Presshülse (26) als der die Stützhülse (14) umgebender Abschnitt einer Metalllage eines Kunststoff/Metallverbund-Rohres ausgebildet ist.
